(19) Europäisches Patentamt / European Patent Office / Office européen des brevets

(11) **EP 1 984 752 B1**

(12) **EUROPÄISCHE PATENTSCHRIFT**

(45) Veröffentlichungstag und Bekanntmachung des Hinweises auf die Patenterteilung:
**01.07.2009 Patentblatt 2009/27**

(21) Anmeldenummer: 06707050.8

(22) Anmeldetag: **17.02.2006**

(51) Int Cl.:
*G01S 15/89* (2006.01)        *G01S 7/62* (2006.01)
*G06T 11/00* (2006.01)

(86) Internationale Anmeldenummer:
**PCT/EP2006/001462**

(87) Internationale Veröffentlichungsnummer:
**WO 2007/095962 (30.08.2007 Gazette 2007/35)**

(54) **VERFAHREN ZUM ERZEUGEN EINES SONARBILDES**

METHOD FOR GENERATING A SONAR IMAGE

PROCEDE POUR LA GENERATION D'UNE IMAGE SONAR

(84) Benannte Vertragsstaaten:
**AT BE BG CH CY CZ DE DK EE ES FI FR GB GR HU IE IS IT LI LT LU LV MC NL PL PT RO SE SI SK TR**

(43) Veröffentlichungstag der Anmeldung:
**29.10.2008 Patentblatt 2008/44**

(73) Patentinhaber: ATLAS Elektronik GmbH
28305 Bremen (DE)

(72) Erfinder:
• **KUMMERT, Anton**
**45549 Sprockhöve (DE)**
• **BOSCHEN, Fritz**
**42899 Remscheid (DE)**
• **RATHJEN, Dirk**
**28357 Bremen (DE)**

(74) Vertreter: **Wasiljeff, Johannes M.B.**
**Jabbusch Arendt & Siekmann**
**Patentanwälte**
**Otto-Lilienthal-Strasse 25**
**28199 Bremen (DE)**

(56) Entgegenhaltungen:
WO-A2-02/059645        US-A- 4 768 156
US-B1- 6 897 802

• **STEVEN G SCHOCK ET AL: "Buried Object Scanning Sonar" IEEE JOURNAL OF OCEANIC ENGINEERING, Bd. 26, Nr. 4, Oktober 2001 (2001-10), XP011042612**
• **SCHOCK S G ET AL: "Buried object scanning sonar for auvS" OCEANS 2003. MTS/IEEE PROCEEDINGS. CELEBRATING THE PAST, TEAMING TOWARD THE FUTURE. SAN DIEGO, CA, SEPT. 22 - 26, 2003, OCEANS MTS/IEEE CONFERENCE PROCEEDINGS, COLUMBIA, MD : MARINE TECHN. SOC, US, Bd. VOL. 5 OF 5, 22. September 2003 (2003-09-22), Seiten 494-499, XP010694242 ISBN: 0-933957-30-0**
• **FERGUSON BRIAN G ET AL: "Application of acoustic reflection tomography to sonar imaging" JOURNAL OF THE ACOUSTICAL SOCIETY OF AMERICA, AIP / ACOUSTICAL SOCIETY OF AMERICA, MELVILLE, NY, US, Bd. 117, Nr. 5, Mai 2005 (2005-05), Seiten 2915-2928, XP012072941 ISSN: 0001-4966 in der Anmeldung erwähnt**
• **KAK, AVINASH; SLANEY, MALCOLM: "Principles of Computerized Tomographic Imaging: Chapter 3" 1999, THE INSTITUTE OF ELECTRICAL AND ELECTRONICS ENGINEERS, INC. , NEW YORK , XP002403279 Seite 49 - Seite 112**
• **KAK, AVINASH; SLANEY, MALCOLM: "Principles of Computerized Tomographic Imaging: Chapter 8" 1999, THE INSTITUTE OF ELECTRICAL AND ELECTRONICS ENGINEERS, INC. , NEW YORK , XP002403280 Seite 297, Spalte 322**

**Beschreibung**

Die Erfindung betrifft ein Verfahren zum Erzeugen eines Sonarbildes von einem Unterwasserareal unter Verwendung eines von einem Wasserfahrzeug getragenen Sonars, das eine Sendeantenne zum Abstrahlen von Schallimpulsen und eine Empfangsantenne zum Empfangen von aus dem Unterwasserareal zurückgestreuten Schallwellen aufweist, die einen Empfangssektor mit einem horizontalen und vertikalen Sektorwinkel aufspannt, der von mindestens einer einen vorgebbaren horizontalen und vertikalen Öffnungswinkel aufweisenden Richtcharakteristik der Empfangsantenne überdeckt ist.

Ein bekanntes, auf Ultraschallbasis arbeitendes Sonarsystem zur Erzeugung eines Abbildes eines Unterwasserareals (US 4 288 866) benutzt Schall impulse mit einem großen Zeit-Bandbreiten-Produkt für eine gute Entfernungsauflösung und einen Bildspeicher, der als dreidimensionale Datenbasis der Objektreflexionen organisiert ist. Ein Schallsender sendet einen Pseudo-Random-Impuls aus, und ein Schallempfänger erfasst die von Objekten reflektierten Schallimpulse als Echosignale. Ein dem Schallempfänger nachgeschalteter Multibeamformer oder Richtungsbildner, der in einem Empfangssektor der Unterwasserantenne eine Anzahl von fächerartig aufgespannten Beams oder Richtcharakteristiken aufspannt, gibt eine Vielzahl von Echos für jeweils eine Winkelauflösungszelle aus, deren horizontale Breite durch den horizontalen Öffnungswinkel des Beams bzw. der Richtcharakteristik bestimmt ist. Die Echosignale werden in Korrelatoren mit einem gespeicherten Muster des Schallimpulses korreliert, an deren Ausgänge für Winkelauflösungszellen zeitkomprimierte Impulse anstehen. Ein Bildspeicher übernimmt die Ausgangsimpulse der Korrelatoren und generiert eine dreidimensionale Datenbasis der Echos in Form eines Satzes von Konturlinien für jede Entfernungszelle. Mittels Standardcomputergrafiktechnik wird aus der dreidimensionalen Datenbasis ein optisches Bild erzeugt, das den Operator unterstützt, ein Objekt zu identifizieren.

Ein bekanntes Verfahren zur Detektion von im Seeboden vergrabenen Objekten (Steven G. Schock ET AL: "Buried Object Scannung Sonar", IEEE JOURNAL OF OCEANIC ENGINEERING, Bd. 26, Nr. 4, Oktober 2001 (2001-10), XPO011042612) erzeugt Bilder von Leitungs- und Kabelabschnitten, die im Sand eingeschlossen sind. Ein Sonar-beleuchtet einen breiten Steifen des Seebodens mit eines linearem Array von akustischen Projektoren und misst die Schallrückstreuung von dem beleuchteten Sedimentvolumen mit einem planaren Hydrophon-Array. Der Ausgang des Hydrophon-Array unterliegt einer Nahfeld-Fokussierung, die dem Sonar erlaubt, nahe dem Seeboden zu operieren. Die Nahfeld-Fokussierung reduziert den Scatter und verbessert das S/N-Verhältnis. Eine von einer dreidimensionalen Matrix von Fokusdaten abgeleitete Draufsicht und Seitenansicht des Seebodens liefert die Position und die Vergrabungstiefe der Objekte. Ein Energiedetektor lokalisiert die Ziele in den Fokusbilddaten.

Es ist bekannt, zur Identifizierung von Seeminen, diese sog. Breitband-Sonar-Transducer-Technologie mit einer Signalverarbeitung für Schallreflexions-Tomographie zu verknüpfen, um hochauflösender Bilder von Seeminen aus einem Sicherheitsabstand von 100m bis 200m zu erhalten (Brian G. Ferguson "applikation of acoustic reflektion tomography to sonar imaging", J. Acoust. Soc. Am. 117(5), May 2005, Seite 2915 bis 2928). Hierzu muss das das Sonar tragende Wasserfahrzeug die auf herkömmliche Weise, z.B. mittels eines Minenjagdsonars, detektierte und klassifizierte Mine umfahren, damit' das Sonar von der Mine reflektierte Echosignale aus unterschiedlichen Aspektwinkeln empfangen kann. Mittels tomographischer Rekonstruktions-Algorithmen wird aus den empfangenen Echosignalen ein zweidimenaionales Bild von der Form der Mine erzeugt.

Der Erfindung liegt die Aufgabe zugrunde, ein Verfahren zum Erzeugen eines Sonarbildes von einem Unterwasserareal, anzugeben, mit dem eine hohe Ortsauflösung des Unterwasserareals innerhalb des Empfangssektors, des Schallempfängers erreicht wird, die unabhängig ist von dem Öffnungswinkel der innerhalb des Empfangssektors ausgebildeten Beams oder Richtcharakteristiken.

Die Aufgabe ist erfindungsgemäß durch die Merkmale im Anspruch 1 gelöst.

Das erfindungsgemäße Verfahren hat den Vorteil, dass ein beliebig großes Unterwasserareal im Raum hochauflösend abgetastet werden kann, so dass Objekte im Unterwasserareal und/oder die Oberfläche des Bodens des Unterwasserareals konturenmäßig sehr detailliert erfasst werden. Hierzu ist eine quasi geradlinige Fahrt des die Sende- und Empfangsantenne tragenden Wasserfahrzeugs über jeweils eine bestimmte Wegstrecke in übereinanderliegenden, parallelen Ebenen ausreichend. Zur Vereinfachung der Terminologie wird die Fahrebene des Wasserfahrzeugs als Horizontalebene und die dazu rechtwinklig ausgerichtete Ebene als Vertikalebene bezeichnet. Entsprechend werden Winkel in der Horizontalebene, also in der Fahrebene, als horizontale Winkel und Winkel in der Vertikalebene als vertikale Winkel bezeichnet. Die Länge der einzelnen Wegstrecken und die Zahl der parallel übereinanderliegenden Wegstrecken sind wiederum von der Ausdehnung des zu erfassenden Unterwasserareals in Fahrtrichtung, also in Horizontalrichtung, und senkrecht dazu, also in Vertikalrichtung abhängig. Bei den bekannten Verfahren ist die Ortsauflösung des Unterwasserareals in Fahrtrichtung von dem horizontalen Öffnungswinkel $\varphi$, also dem in der Fahrebene aufgespannten Öffnungswinkel, und der Anzahl der Richtcharakteristiken oder Beams im Empfangssektor abhängig und verschlechtert sich mit zunehmender radialer Entfernung. Im Gegensatz dazu ist bei dem erfindungsgemäßen Verfahren die Ortsauflösung in Fahrtrichtung unabhängig von dem horizontalen Öffnungswinkel der Richtcharakteristik und über die Entfernung konstant. Sie ist ausschließlich von der Größe des überstrichenen Aspektwinkelintervalls, also vom horizontalen Sektorwinkel $\varphi_B$ des Empfangssektors der Empfangsantenne, abhängig, unter dem gleiche Punkte des Unterwasserareals während der vom Wasserfahrzeug zurückgelegten Fahrstrecke mit der Empfangsantenne "betrachtet" werden. Die max. erzielbare Ortsauflösung in Fahrtrichtung beträgt allgemein

$$\frac{c \cdot \tau}{2} / \sin \frac{\varphi_B}{2} \,,$$ 

wobei c die Schallgeschwindigkeit im Wasser und $\tau$ die Impulsdauer der Schallimpulse ist. Nichts desto weniger ist die Zahl der Messstellen und damit der Aspektwinkel innerhalb des Aspektwinkelintervalls hinreichend groß zu wählen.

Die Ortsauflösung des Unterwasserareals senkrecht zur Fahrtrichtung, also in Vertikalrichtung, ist abhängig von der Zahl der parallel übereinanderliegenden Wegstrecken, die von dem Wasserfahrzeug durchfahren werden.

Der Empfangssektor kann durch Beamforming oder Richtungsbildung von einer Mehrzahl von fächerartig aneinanderliegenden Beams oder Richtcharakteristiken überspannt sein, die alle den gleichen vertikalen Öffnungswinkel aufweisen, wodurch zwar der Abstand der Messstellen voneinander und damit die Fahrgeschwindigkeit des Unterwasserfahrzeugs vergrößert werden kann, nicht aber die Ortsauflösung in Fahrtrichtung verändert wird. Die Zahl der Aspektwinkel, unter dem ein Volumenelement im Unterwasserareal betrachtet wird, ist dann gleich der Zahl der Beams oder Richtcharakteristiken, in denen das Volumenelement erscheint und kann über den Abstand der Messstellen gesteuert werden. Sinnvollerweise wird der Abstand $A_y$ der Messstellen

$$A_y \leq \frac{\tan \frac{\varphi_B}{2}}{\tan \left( \frac{\varphi_B}{2K} \right)} \cdot \frac{c \cdot \tau}{2 \cdot \sin \left( \frac{\varphi_B}{2} \right)}$$

gewählt, wobei K die Anzahl der Beams oder Richtcharakteristiken ist, die den Empfangssektor mit dem horizontalen Sektorwinkel $\varphi_B$ überdecken.

Beispielhaft sei ein Empfangssektor der Empfangsantenne mit einem Sektorwinkel $\varphi_B = 90°$ angenommen, der mit Schallimpulsen der Impulsdauer $\tau = 0,1$ms im Abstand $A_y$ der Messstellen voneinander beschallt wird. Die Empfangsantenne möge einen den Empfangssektor überdeckenden Beamfächer aus 10 Beams oder Richtcharakteristiken besitzen, die jeweils einen Öffnungswinkel von 9° aufweisen. Mit diesen Daten wird bei einer Schallgeschwindigkeit c = 1500m/s eine Ortsauflösung des Unterwasserareals in Fahrtrichtung innerhalb des Empfangssektors von 10,6cm unabhängig von der Entfernung erzielt. Der maximale Abstand $A_y$ der Messstellen voneinander, der nicht überschritten werden soll, beträgt ca. 1,35m.

Bei den bisher üblichen Verfahren, bei denen die Winkelauflösung des Unterwasserareals innerhalb des Empfangssektors durch den horizontalen Öffnungswinkel $\varphi$ der Beams oder Richtcharakteristiken bestimmt wird, wird dagegen die gleiche Ortsauflösung in Fahrtrichtung von 10,6cm mit einer Empfangsantenne, bei der ein Beamfächer von etwa 150 Beams oder Richtcharakteristik mit jeweils einem horizontalen Öffnungswinkel $\varphi$ = 0,6° ausgebildet ist, in einer Entfernung von 10m erreicht. Für eine gleiche Auflösung in einer Entfernung von 20m benötigt man bereits die doppelte Anzahl von Beams oder Richtcharakteristiken mit einem horizontalen Öffnungswinkel von $\varphi$ = 0,3°. Zur Halbierung des horizontalen Öffnungswinkels müsste die Länge der Empfangsantenne bei gleicher Sendefrequenz verdoppelt werden. Dies macht deutlich, dass mit dem erfindungsgemäßen Verfahren bei ausreichend hoher Fahrgeschwindigkeit des Wasserfahrzeugs eine hohe, entfernungsunabhängige Winkelauflösung mit einer Empfangsantenne erzielt wird, deren Länge sehr viel Spielraum zur Anbringung auch an kleinen, z.B. autonomen oder ferngelenkten Unterwasserfahrzeugen bietet. Diese Ortsauflösung in Fahrtrichtung ist konstant und wird mit zunehmender Entfernung - anders als bei dem bekannten Verfahren - nicht schlechter. Umgekehrt betrachtet wird mit dem erfindungsgemäßen Verfahren mit einer Empfangsantenne herkömmlicher Länge eine sehr viel höhere Ortsauflösung in Fahrtrichtung erreicht als bei den bekannten Verfahren, die zudem noch entfernungskonstant ist. Das erfindungsgemäße Verfahren liefert auch im Nahbereich des Sonars sehr gute Bilddaten, da die Krümmung der Schallwellen im Nahbereich berücksichtigt wird.

Zweckmäßige Ausführungsformen des erfindungsgemäßen Verfahrens mit vorteilhaften Weiterbildungen und Ausgestaltungen der Erfindung ergeben sich aus den weiteren Ansprüchen.

Die Erfindung ist anhand von in der Zeichnung dargestellten Ausführungsbeispielen im folgenden näher beschrieben. Es zeigen:

Fig. 1      eine Rückansicht eines in einem Seegebiet ' fahrenden Wasserfahrzeugs mit einem Sonar zur Erfassung von Daten von einem Unterwasserareal, schematisiert dargestellt,

Fig. 2      ein Blockschaltbild der Senderseite des Sonars,

Fig. 3      ein Blockschaltbild der Empfängerseite des Sonars,

Fig. 4      eine perspektivische Darstellung eines dreidi-

Fig. 5 eine Draufsicht eines Momentanzustands bei der Datenerfassung im Analysegebiet in Fig. 4, schematisch dargestellt,

Fig. 6 eine vergrößerte perspektivische Darstellung des Ausschnitts VI in Fig. 5,

Fig. 7 eine Illustration zur Erläuterung der Zuordnung von Volumenelement und Amplitudenwert der Filtersignale zur Rekonstruktion des Sonarbilds,

Fig. 8 eine gleiche Darstellung wie in Fig. 7 gemäß einer Verfahrensvariante,

Fig. 9 ein Beispiel einer Übertragungsfunktion eines Filters im Blockschaltbild der Fig. 3,

Fig. 10 eine gleiche Darstellung wie in Fig. 5 mit modifizierten, vom Wasserfahrzeug zurückzulegenden Wegstrecken.

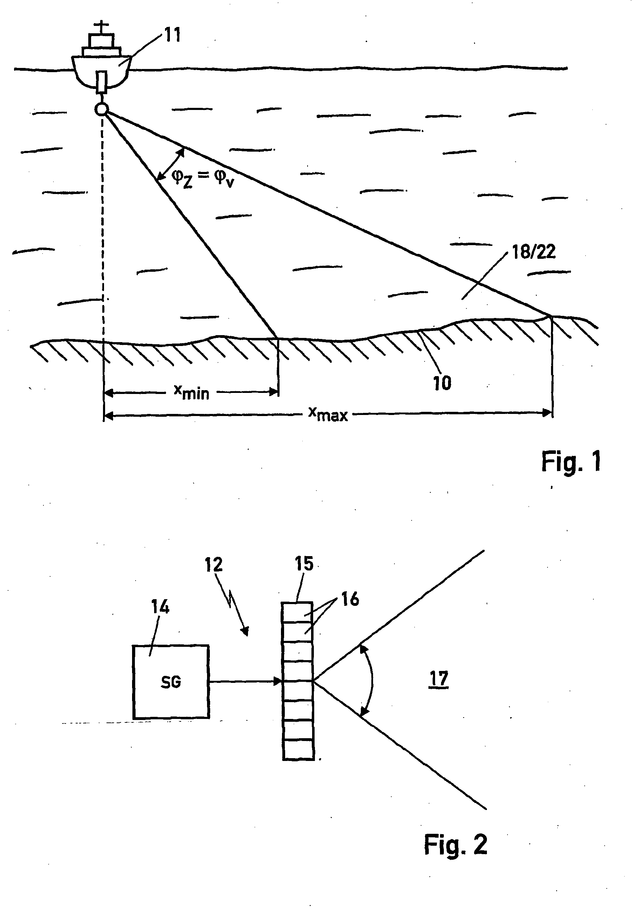

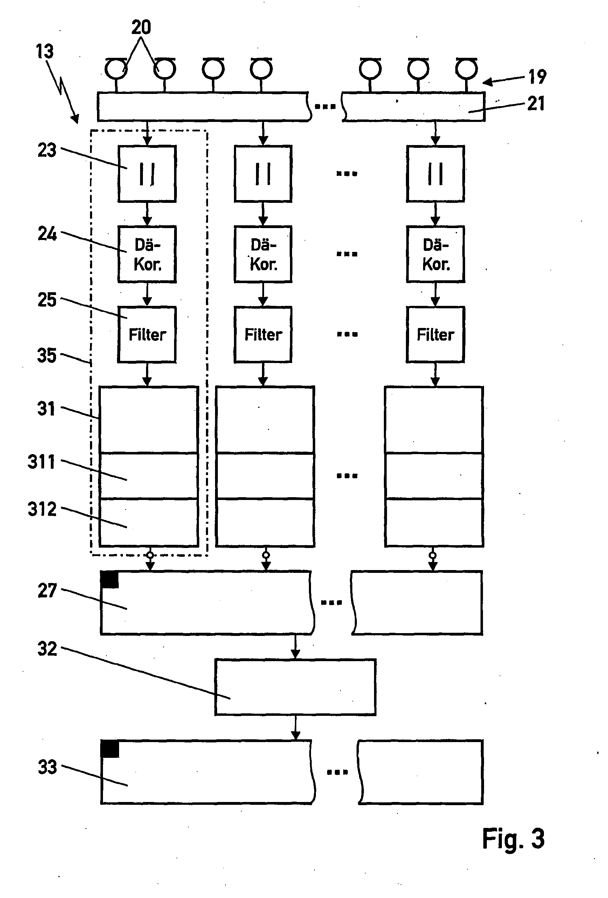

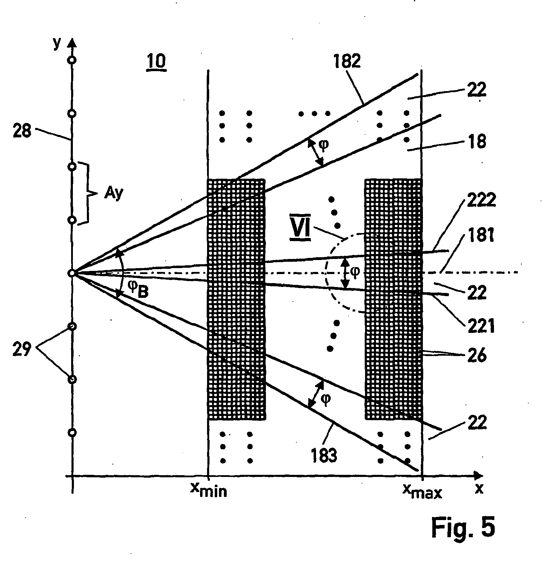

Bei dem nachstehend beschriebenen Verfahren zum Erzeugen eines Sonarbildes von einem Unterwasserareal wird ein von einem Wasserfahrzeug 11 getragenes Sonar verwendet, das einen Schallsender 12 (Fig. 2) und einen Schallempfänger 13 (Fig. 3) aufweist. Der Schallsender 12 umfasst einen Sendeimpulsgenerator 14 und eine Sendeantenne 15, die eine Mehrzahl von auf einem Antennenträger angeordneten, elektroakustischen Wandlern 16 aufweist. Die vom Sendeimpulsgenerator 14 generierten, elektrischen Sendeimpulse werden von der Sendeantenne 15 als vorzugsweise breitbandige Schallimpulse in einen Sendesektor 17 abgestrahlt, dessen Raumwinkel mindestens gleich groß ist wie ein empfangsseitig im Unterwasserareal 10 aufgespannter Empfangssektor 18 mit dem horizontalen Sektorwinkel $\varphi_B$ (Fig. 5) und dem vertikalen Sektorwinkel $\varphi_Z$ (Fig. 1). Vorzugsweise wird der Raumwinkel des von der Sendeantenne 15 beschallten Sendesektors 17 größer als der des Empfangssektors 18. gewählt.

Der in Fig. 3 im Blockschaltbild dargestellte Schallempfänger 13 weist eine elektroakustische Empfangsantenne 19 aus einer Vielzahl von Hydrofonen 20 auf, die ebenfalls auf einem Antennenträger angeordnet sind. Zur Erzielung einer vertikalen Bündelung der Empfangsantenne 19, d.h. zur Einstellung eines vertikalen Öffnungswinkels $\varphi_Z$, der den vertikalen Sektorwinkel $\varphi_Z$ des Empfangssektors 18 festlegt, sind vertikal untereinanderliegende Hydrofone 20 zu einem sog. Stave zusammengefasst. Jedes der in Fig. 3 dargestellten Hydrofone 20 ist damit Teil eines Stave. Alle Hydrofone 20, bzw. alle Staves, werden gleichzeitig betrieben. Aus den elektrischen Ausgangssignalen der Hydrofone 20 werden in bekannter Weise durch Signalverarbeitung, der sog. Richtungsbildung oder dem sog. Beamforming, Gruppensignale aus unterschiedlichen Empfangsrichtungen mit jeweils maximaler Empfangsempfindlichkeit erhalten. Die maximale Empfangsempfindlichkeit der Empfangsantenne 19 wird auch als Richtcharakteristik oder Beam bezeichnet. Das Beamforming erfolgt in einem Beamformer 21 oder Richtungsbildner wobei ein Fächer von aneinanderliegenden Beams oder Richtcharakteristiken entsteht. Im folgenden wird in Übereinstimmung mit dem fachüblichen Sprachgebrauch nur noch der Begriff Beam verwendet.

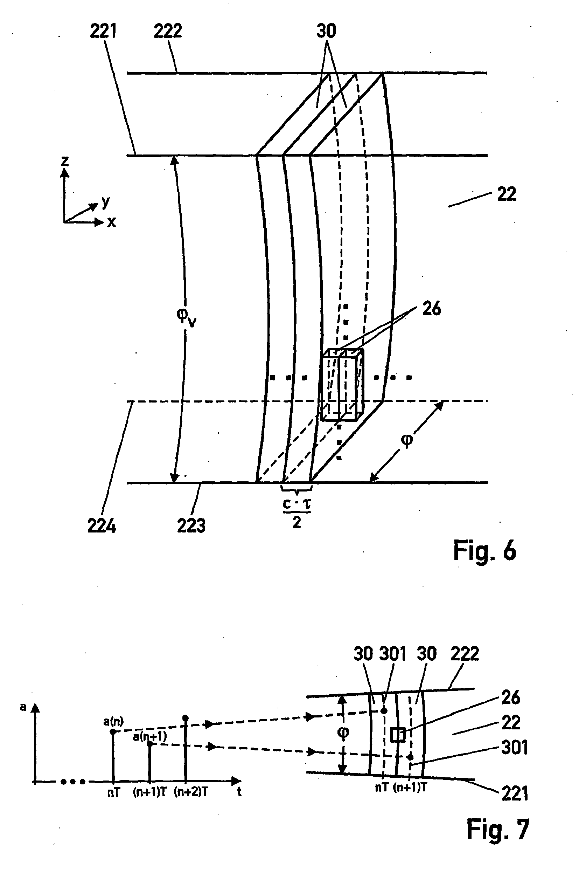

Der sich aus der Vielzahl der horizontal aneinanderliegenden Beams 22 ergebende Beamfächer (Fig. 3) überdeckt den Empfangssektor 18 des Schallempfängers 13. Jeder Beam 22 hat einen horizontalen Öffnungswinkel $\varphi$ (Fig. 5) und einen vertikalen Öffnungswinkel $\varphi_V$ (Fig. 6), der im beschriebenen Ausführungsbeispiel gleich dem vertikalen Sektorwinkel $\varphi_Z$ des Empfangssektors 18 gemacht ist (Fig. 1). Zur Erzeugung der Gruppensignale der einzelnen Beams 22 werden die Ausgangssignale der Hydrofone 20 oder Staves verstärkt, mit einer Abtastfrequenz 1/T abgetastet und komplex weiterverarbeitet, wobei die einzelnen Abtastwerte oder Samples zeitrichtig verzögert und konphas zu komplexen Gruppensignalen addiert werden. Jedes der komplexen Gruppensignale wird komplex in die Basisbandlage gemischt und tiefpassgefiltert. Anschließend wird im Block 23 der Betrag des Tiefpassausgangssignals gebildet. Die aus dem Block 23 hervorgehenden, zeitlichen Verläufe des Betrags werden im folgenden als Empfangssignale bezeichnet. Bei einer alternativen Ausführung des Verfahrens kann jedoch auch anstelle der Betragsbildung eine Betragsquadratbildung vorgenommen werden. Auch können die komplexen Gruppensignale selbst, also unter Umgehung der vorstehend beschriebenen Basisbandmischung und der Betrags- bzw. Betragsquadratbildung, oder deren Realteil als Empfangssignale für die nachfolgend beschriebene Weiterverarbeitung verwendet werden.

Die Empfangssignale werden in Block 24 mindestens einer Korrektur unterzogen, um z. B. die während des Hin- und Rücklaufs des Schallimpulses durch geometrische Dämpfung bedingte Abnahme der Amplitude der Empfangssignale auszugleichen. Die korrigierten Empfangssignale werden im Filter 25 derart gefiltert, dass niederfrequente Anteile der Empfangssignale geringer bewertet werden als hochfrequente Anteile. Das Filter 25 hat hierzu eine hochpassähnliche Übertragungsfunktion mit einem ansteigenden, vorzugsweise linearen Verlauf über der Frequenz. Ein Beispiel für dieses "hochpassähnliche" Filter 25 ist das sog. Rampenfilter. Im Falle der beschriebenen, digitalen Signalverarbeitung wird als Filter 25 ein lineares System eingesetzt, dessen periodische Übertragungsfunktion $H(e^{j\omega T})$ innerhalb der durch die halbe negative und halbe positive Abtastkreisfrequenz $-\pi/2T$ bzw. $+\pi/2T$ festgelegten Grenzen proportional dem Betrag der Kreisfrequenz $\omega$ ist und im Bereich -π/2T bis 0 abfällt und im Bereich 0 bis +π/2T ansteigt. Ein solches lineares System ist in Fig. 2 dargestellt. Die beschriebene Filterung der Empfangssignale bewirkt, dass Filtersignale mit positiven und negativen Amplituden entstehen, die eine Rekonstruktion des Sonarbildes erlauben. Eine weitere Tiefpassfilterung mit einer Übertragungsfunktion entsprechend einer Si-Funktion oder einer Fensterfunktion, beispielsweise mit einem Cosinus- oder Hamming-, Hanning- oder Tschebyscheff-Fenster, führt zu einer Verbesserung des Nutz/Störverhältnisses des Filtersignals.

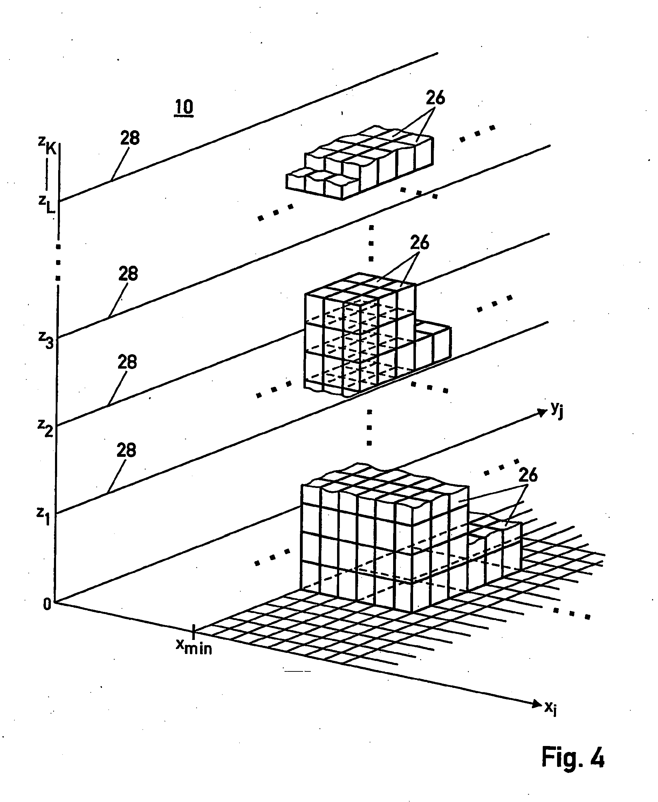

Zur Erzeugung eines Sonarbildes von einem Unterwasserareal 10, wie es beispielsweise in Fig. 4 und 5 schematisiert in Perspektive und Draufsicht zu sehen ist, wird im Unterwasserareal 10 ein dreidimensionaler Analyseraum aus einer Vielzahl von aneinander- und übereinandergereihten, quaderförmigen Volumenelementen 26 definiert, die mit ihren Stirn- und Seitenflächen aneinanderstoßen. Das das Sonar tragende Wasserfahrzeug 11 fährt im Unterwasserareal 10 vertikal übereinanderliegende, parallele Wegstrecken 28 aufeinanderfolgend ab, deren vertikale Koordinaten in Fig. 4 mit $z_k$ (k=1 bis L) angegeben ist. Alle Wegstrecken 28 sind parallel zu der Horizontalkomponente y des dreidimensionalen Koordinatensystems x, y, z ausgerichtet und werden vom Wasserfahrzeug 11 in y-Richtung durchfahren. Die vertikalen Abstände der Wegstrecken 28 voneinander sind vorzugsweise gleich. Eine sinnvolle Zahl L der Wegstrecken 28 erhält man aus der Grobschätzung

$$L \geq \frac{z_L - z_1}{\frac{c \cdot \tau}{2}} \tan \frac{\varphi_v}{2},$$

wobei c die Schallgeschwindigkeit im Wasser und τ die Impulsdauer der von der Sendeantenne 15 abgestrahlten Schallimpulse (CW-Impulse) ist. Der Analyseraum ist in Radialrichtung durch die horizontalen Koordinaten $x_{min}$ und $x_{max}$ (Fig. 5) begrenzt, wobei $x_{min}$ der horizontalen Entfernung der Vorderkante des Analyseraums von den übereinanderliegenden Wegstrecken 28 entspricht. In y- und z-Richtung ist der Analyseraum durch die Koordinaten $y_{min}$, $y_{max}$ bzw. $z_{min}$ und $z_{max}$ festgelegt, was jedoch nicht weiter dargestellt ist. Die quaderförmigen Volumenelemente 26 im Analyseraum weisen eine gleiche Grund- und Deckfläche auf, die vorzugsweise quadratisch ist, und eine vertikale Höhe $\Delta_z$. Die Kantenlängen von Grund- und Deckfläche sind abhängig von der gewünschten oder maximal möglichen Radialauflösung bemessen. Im Falle des Aussendens von CW-Impulsen werden die Kantenlängen vorzugsweise gleich oder kleiner c·τ/2 bemessen. Eine Kantenlänge größer c·τ/2 ist möglich, wenn zur Reproduktion das noch nachstehend in Verbindung mit Fig. 7 beschriebene Verfahren eingesetzt wird. In den hier beschriebenen Ausführungsbeispielen ist die Kantenlänge gleich c·τ/2 gewählt. Eine grobe Dimensionierung der vertikalen Höhe $\Delta_z$ der Volumenelemente 26 erhält man aus der Gleichung

$$\Delta_z \approx \frac{c \cdot \tau}{2} \frac{2x_{min}}{z_L - z_1}$$

Jedem Volumenelement 26 ist ein Speicherplatz in einem Speichermedium 27, im folgenden kurz Speicher 27 genannt (Fig. 3), zugeordnet. Beim Abfahren der Wegstrecken 28 durch das Wasserfahrzeug 11 ist die Empfangsantenne 19 so ausgerichtet, dass ihr Empfangssektor 18 im Ausführungsbeispiel nach Steuerbord weist. Dabei ist der Winkel, den die Mittelachse 181 oder Winkelhalbierende des Empfangssektors 18 mit der Längsachse des Wasserfahrzeugs 11 einschließt, im Ausführungsbeispiel mit 90° gewählt. Er kann jedoch auch von 90° abweichen. Beim Zurücklegen der Wegstrecken 28 überstreicht der Empfangssektor 18 mit der Vielzahl der darin aufgespannten Beams 22 das Analysegebiet in einer Breite $x_{max}$ - $x_{min}$ (Fig. 1 und 5), wobei von jeder Wegstrecke 28 aus jedes Volumenelement 26 des Analyseraums einmal von der in Fahrtrichtung vorderen Seitenkante 182 des Empfangssektors-18 und einmal von der in Fahrtrichtung hinteren Seitenkante 183 des Empfangssektors 18 überstrichen wird. In aufeinanderfolgenden, vorzugsweise äquidistanten Messstellen 29 längs der Wegstrecken 28 (Fig. 5) sendet die Sendeantenne 15 jeweils einen Schallimpuls mit der Impulsdauer τ aus. Die Empfangsantenne 19 empfängt die aus dem Unterwasserareal 10 zurückgestreuten Echosignale, die von dem Beamformer 21 als den Beams 22 zugeordnete komplexe Gruppensignale ausgegeben werden.

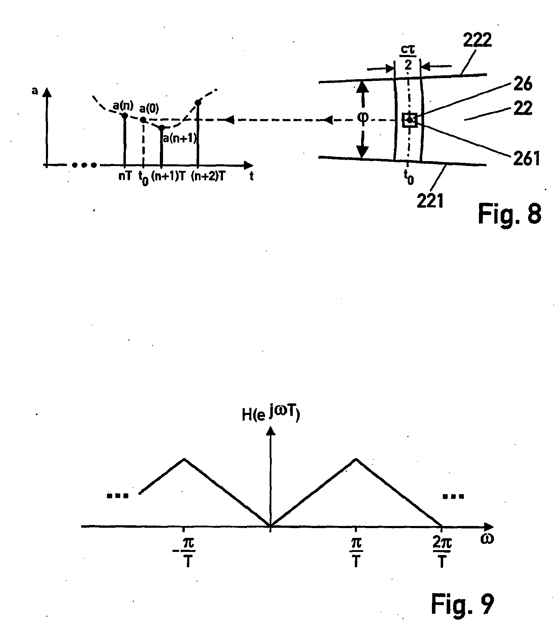

Die Gruppensignale werden in der vorstehend beschrieben Weise signaltechnisch verarbeitet, so dass aus jedem Beam 22 - wie beschrieben - ein zeitdiskretes Filtersignal (Fig. 7 und 8) zur Verfügung steht. Mit den Filtersignalen aller Beams 22 wird das Sonarbild von Messstelle 29 zu Messstelle 29 sukzessive rekonstruiert, so dass am Ende aller vom Wasserfahrzeug 11 durchlaufenen Wegstrecken 28 ein komplettes Sonarbild des Analyseraums im Unterwasserareal 10 erhalten wird. Hierzu werden in jeder Messstelle 29 in dem innerhalb des von einem Beam 22 mit dem horizontalen Öffnungswinkel φ und dem vertikalen Öffnungswinkel $\varphi_V$ eingegrenzten Bereichs des Analyseraums, im folgenden Analyseraum-Bereich genannt, in Radialrichtung aneinanderliegende, sphärisch gekrümmte Quader 30 (Fig. 6) mit der radialen Breite c·τ/2 definiert, die sich über den Querschnitt des Beams 22, bis zu den Bereichsgrenzen des Analyseraum-Bereichs, also bis zu den oberen Begrenzungskanten 221, 222 und zu den unteren Begrenzungskanten 223, 224 des Beam 22, erstrecken.

Die mittleren Krümmungsradien der Quader 30 werden unter Berücksichtigung der Schallgeschwindigkeit c aus den diskreten Zeitwerten der Filtersignale berechnet. Der mittlere Krümmungsradius eines Quaders 30 entspricht dabei der Entfernung der Mitte 301 des Quaders 30 von dem Ort der Empfangsantenne 19 und definiert die Lage des Quaders 30 im Analyseraum-Bereich. Als Ort der Empfangsantenne 19 wird der Zentrierpunkt des Empfangssektors 18 betrachtet. In Fig. 7 ist dies illustriert. Beispielhaft ist für einen diskreten Zeitwert $n \cdot T$ des diskreten Filtersignals ein vorderer Quader 30 und ein für einen diskreten Zeitwert $(n+1)T$ des Filtersignals ein an dem vorderen Quader 30 anliegender, hinterer Quader 30 gleicher radialer Breite festgelegt. Wie in Fig. 7 illustriert ist, wird jedem der Quader 30 der zu dem Zeitwert $n \cdot T$ bzw. $(n+1)T$ zugehörige Amplitudenwert des zeitdiskreten Filtersignals zugewiesen. Im Beispiel der Fig. 7 wird dem vorderen Quader 30 aufgrund des Zeitwerts $n \cdot T$ der Amplitudenwert $a(n)$ und dem hinteren Quader 30 aufgrund des Zeitwerts $(n+1)T$ der Amplitudenwert $a(n+1)$ zugewiesen. Jeder Quader 30 überdeckt mehrere Volumenelemente 26 ganz oder teilweise. Für alle Volumenelemente 26, die ganz oder teilweise innerhalb des vorderen Quaders 30 liegen, wird der Amplitudenwert $a(n)$ in diejenigen Speicherplätze im Speicher 27 eingeschrieben, die den ganz oder teilweise in dem vorderen Quader 30 liegenden Volumenelementen 26 zugewiesen sind. Für alle Volumenelemente 26, die ganz oder teilweise innerhalb des hinteren Quaders 30 liegen, wird der Amplitudenwert $a(n+1)$ in diejenigen Speicherplätze im Speicher 27 eingeschrieben, die den ganz oder teilweise in dem hinteren Quader 30 liegenden Volumenelementen 26 zugewiesen sind, wobei in jedem Speicherplatz der Amplitudenwert auf einem bereits in diesem Speicherplatz vorhandenen Speicherwert, der aus anderen Beams 22 oder aus an vorherigen Messstellen 29 durchgeführten Messungen herrührt, aufaddiert wird. Dies wird für alle in radialer Richtung aneinanderliegenden Quader 30 durchgeführt, die dann durch die diskreten Zeitwerte $(n+2)T$, $(n+3)T$ usw. festgelegt sind und denen dann die Amplitudenwerte $a(n+2)$, $a(n+3)$ usw. zugewiesen werden.

Die Amplitudenwerte werden aber nicht 1:1 allen Volumenelementen 26 innerhalb desselben Quaders 30 zugewiesen, sondern nur in einer ihre Lage innerhalb des Quaders 30 berücksichtigenden Weise, wozu die Amplitudenwerte vor ihrem Einschreiben in den Speicher 27 gewichtet werden. Die Wichtung erfolgt dabei in zweierlei Weise. Zum einen wird der Volumenanteil, eines jeden Volumenelements 26, der vom Quader 30 erfasst wird, und zum andern die Empfangsempfindlichkeit des Beams 22 berücksichtigt, die von der Mitte des Beams 22 zu den oberen und unteren Beamkanten 221 - 224 (Fig. 6) hin abnimmt. Der beschriebene Vorgang der Rekonstruktion des Sonarbildes wird in der Schaltungsanordnung gemäß Fig. 3 im Block 31 für jeden Beam 22 durchgeführt, wobei im Unterblock 311 die Volumenwichtung durch Multiplikation des Amplitudenwerts mit einem Volumen-Wichtungsfaktor und im Unterblock 312 die Empfangsempfindlichkeits-Wichtung durch Multiplikation des Amplitudenwerts mit einem von der Empfangsempfindlichkeit des Beams 22 über seine Öffnungswinkel $\varphi, \varphi_V$ abgeleiteten Wichtungsfaktoren durchgeführt wird.

In einer in Fig. 8 illustrierten Verfahrensvariante für die Zuweisung von Amplitudenwerten aus den zeitdiskreten Filtersignalen zu den einzelnen Volumenelementen 26 wird für jedes Volumenelement 26, das innerhalb des vom Beam 22 überdeckten Bereichs, also innerhalb des von den Öffnungswinkeln $\varphi, \varphi_V$ des Beams 22 eingegrenzten Bereichs des Analyseraums, liegt, die Entfernung des Zentrums 261 des Volumenelements 26 zu dem Zentrierpunkt des Empfangssektors 18 bestimmt und aus der Entfernung mit der Schallgeschwindigkeit c ein Zeitwert $t_0$ berechnet. Aus dem zeitdiskreten Filtersignal wird zu dem Zeitwert $t_0$ ein zugehöriger Amplitudenwert $a(0)$ entnommen. In dem in Fig. 8 dargestellten Beispiel liegt der Zeitwert $t_0$ zwischen den diskreten Zeitwerten $nT$ und $(n+1)T$. In diesem Fall wird der Amplitudenwert $a(0)$ für den Zeitwert $t_0$ durch Interpolation zwischen den Amplitudenwerten $a(n)$ und $a(n+1)$ ermittelt. Der durch Interpolation erhaltene Amplitudenwert $a(0)$ wird dem Volumenelement 26 zugewiesen. Dieser Amplitudenwert $a(0)$ wird entsprechend der Lage des Volumenelements 26 im Beam 22 gewichtet, und zwar mit einem Wichtungsfaktor multipliziert, der die Empfangsempfindlichkeit des Beams 22 am Ort des Volumenelement 26 berücksichtigt. Dies wird für alle Volumenelemente 26 durchgeführt, die innerhalb des von den Öffnungswinkeln $\varphi, \varphi_V$ des Beams 22 eingegrenzten Bereichs des Analyseraums liegen. Im Weiteren wird in gleicher Weise, wie beschrieben, verfahren, also Einschreiben der gewichteten Amplitudenwerte in die zugehörigen Speicherplätze und Aufaddieren auf die bereits vorhandenen Speicherwerte. Voraussetzung für diese Verfahrensvariante ist es, dass die Kantenlänge der quadratischen Grund- und Deckflächen der Volumenelemente 26 gleich oder kleiner bemessen wird als die radiale Auflösung, die in Fig. 8 durch eine vordere und eine hintere Begrenzungslinie verdeutlicht ist und im Ausführungsbeispiel $c \cdot \tau/2$ beträgt. Eine gegenüber $c \cdot \tau/2$ größere Kantenlänge der Volumenelemente 26, wie bei der Verfahrensvariante gemäß Fig. 7, ist nicht zulässig.

Die beschriebene Rekonstruktion wird bei ununterbrochener, vorzugsweise kontinuierlicher Fahrt des Wasserfahrzeugs 11 an allen Messstellen 29 längs der Wegstrecken 28 jeweils in allen Beams 22 durchgeführt, wobei die Messstellen 29 einen Abstand $A_y$ voneinander haben (Fig. 5). Der Maximalabstand $A_y$, der für eine ordnungsgemäße Datenerfassung nicht überschritten werden soll, ist von der Zahl der Beams 22 abhängig, die den Empfangssektor 18 überdecken und lässt sich grob abschätzen gemäß

$$A_y \leq \frac{\tan\frac{\varphi_B}{2}}{\tan\left(\frac{\varphi_B}{2K}\right)} \cdot \frac{c \cdot \tau}{2 \cdot \sin\left(\frac{\varphi_B}{2}\right)}$$

wobei K die Anzahl der den Empfangssektor 18 mit dem horizontalen Sektorwinkel $\varphi_B$ abdeckenden Beams 22 ist.

Am Ende der vom Wasserfahrzeug 10 zurückgelegten Wegstrecken 28 wird der Speicherinhalt des Speichers 27 im Block 32 normiert. Die Normierung wird in der Weise durchgeführt, dass jeder der in den Speicherplätzen des Speichers 27 enthaltenen Speicherwerte durch die Summe der Quadrate der in den jeweiligen Speicherwert eingegangenen Wichtungsfaktoren dividiert wird. Dabei ist der Wichtungsfaktor in der erstbeschriebenen Verfahrensvariante das Produkt aus Empfangsempfindlichkeits-Wichtungsfaktor und Volumen-Wichtungsfaktor und in der zweitbeschriebenen Verfahrensvariante allein der Emfangsempfindlichkeits-Wichtungsfaktor. Der normierte Speicherinhalt wird in einem Speichermedium 33 (Speicher 33 in Fig. 3) abgelegt, der damit das vollständige Sonarbild enthält, das mit computergraphischen Techniken auf einem Display optisch dargestellt werden kann.

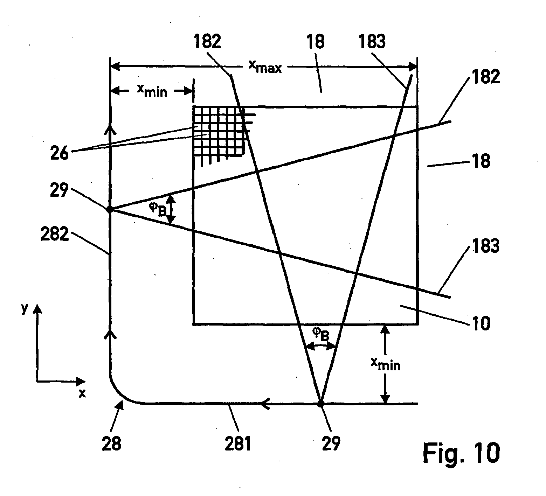

In Fig. 10 ist schematisch eine obere Wegstrekke 28 dargestellt, bei der das Unterwasserareal 10 aus senkrecht zueinander weisenden Aspektwinkelintervallen oder Sektorwinkeln $\varphi_B$ "betrachtet" wird. Jeder der übereinanderliegenden Wegstrecken 28 für das Wasserfahrzeug 11 ist dabei in zwei Streckenabschnitte 281 und 282 unterteilt, die rechtwinklig zueinander ausgerichtet sind. Jeder Streckenabschnitt 281, 282 ist so groß bemessen, dass jedes Volumenelement 26 im Analyseraum von jedem Streckenabschnitt 281, 282 aus mindestens einmal von den beiden seitlichen Begrenzungskanten 182, 183 des Empfangssektors 18 mit dem Sektorwinkel $\varphi_B$ überstrichen wird. Wie zu Fig. 5 beschrieben, kann der Empfangssektor 18 wieder von einer Vielzahl von Beams 22 überdeckt sein, um einen Abstand $A_y$ zwischen den Messstellen 29 zu erhalten, der eine ausreichend hohe Fahrgeschwindigkeit des Wasserfahrzeugs 11 erlaubt. Der Analyseraum im zu vermessenden Unterwasserareal 10 wird bei jeder der übereinanderliegenden, zurückgelegten Wegstrecken 28 einmal längs des Streckenabschnitts 281 in x-Richtung und einmal längs des Streckenabschnitts 282 in y-Richtung und jeweils in z-Richtung abgetastet, so dass am Ende der Wegstrecken 28 der Analyseraum des Unterwasserareals 10 vollständig erfasst ist. Die beschriebene Ausführung der Wegstrecken 28 ist insbesondere dann von Vorteil, wenn der horizontale Sektorwinkel $\varphi_B$ der Empfangsantenne 19 bauartbedingt nur kleine Werte, z.B. 10°, besitzt. Zum Erzeugen der Sonarbilder ausgedehnter Unterwasserareale werden mehrere Wegstrecken, wie sie in Fig. 5 und 6 oder Fig. 10 dargestellt sind, hintereinandergereiht.

In Erweiterung des beschriebenen Verfahrens kann auch senkrecht zur Fahrebene, also vertikal, ein Beam-Fächer aus mehreren Beams aufgespannt werden, wobei deren vertikale Öffnungswinkel $\varphi_V$ so festgelegt werden, dass die Summe der vertikalen Öffnungswinkel $\varphi_V$ der Beams gleich dem vertikalen Sektorwinkel ($\varphi_Z$ des Empfangssektors 18 ist. Die Signalverarbeitung pro Beam 22 bleibt unverändert, ebenso die Rückprojektionen des dreidimensionalen Analyseraums. Lediglich die sphärischen Quader werden durch einen in vertikaler Richtung schmalen Beam definiert, so dass der in Fig. 6 angegebene vertikale Öffnungswinkel $\varphi_V$, = $\varphi_Z$ durch $\varphi_V$ = $\varphi_Z$/N ersetzt werden muss, wobei N die Anzahl der in Vertikalrichtung übereinanderliegenden Beams ist.

Das beschriebene Verfahren kann auch dahingehend abgewandelt werden, dass anstelle eines Beamfächers nur ein Beam generiert wird, dessen horizontaler Öffnungswinkel $\varphi$ gleich dem horizontalen Sektorwinkel $\varphi_B$ ist. In diesem Fall muss jedoch der Abstand Ay der Messstellen 29 sehr viel kleiner sein, womit eine Reduktion der maximal möglichen Fahrgeschwindigkeit des Wasserfahrzeugs 11 einhergeht. Aber auch hier wird der horizontale Öffnungswinkel % des Empfangssektors 18 der Empfangsantenne 19 so groß gemacht, wie es die Einbauverhältnisse am Wasserfahrzeug zulassen.

In einer weiteren Variation des beschriebenen Verfahrens kann der Empfangssektor 18 auch auf der Backbordseite oder mit zwei Empfangsantennen auf der Steuer- und Backbordseite des Wasserfahrzeugs 11 aufgespannt werden. Im letzten Fall werden gleichzeitig Unterwasserareale auf beiden Seiten der Fahrtrichtung abgetastet. Auch kann es von Vorteil sein, wenn das Wasserfahrzeug 11 eine mäanderförmige Wegstrecke zurücklegt. Selbstverständlich ist es möglich, auf die Digitalisierung der Ausgangssignale der Hydrofone zu verzichten und das Verfahren auf Basis analoger Empfangssignale durchzuführen.

Das vorstehend beschriebene Verfahren kann auch dahingehend abgeändert werden, dass anstelle eines Wasserfahrzeugs 11 ein Tauchgerät als Sonarträger verwendet wird, das eine vertikale Wegstrecke zurücklegt. In diesem Fall würde das gleiche Verfahren mit einem um 90° gedrehten Empfangssektor und einem entsprechend um 90° gedrehten Beamfächer durchgeführt werden.

**Patentansprüche**

1.  Verfahren zum Erzeugen eines Sonarbildes von einem Unterwasserareal (10) unter Verwendung eines von einem Wasserfahrzeug (11) getragenen Sonars, das eine Sendeantenne (15) zum Abstrahlen von Schallimpulsen und eine Empfangsantenne (19) zum Empfangen von aus dem Unterwasserareal (10) zurückgestreuten Schallwellen aufweist, die einen Empfangssektor (18) mit einem horizontalen und vertikalen Sektorwinkel ($\varphi_B$, $\varphi_Z$) aufspannt, der von mindestens einer einen vorgebbaren horizontalen und vertikalen Öffnungswinkel ($\varphi$, $\varphi_V$). aufweisenden Richtcharakteristik der Empfangsantenne (19) überdeckt ist, bei dem folgende Verfahrensschritte durchgeführt werden:

- im Unterwasserareal (10) wird ein dreidimensionaler Analyseraum aus einer Vielzahl von aneinander- und übereinandergereihten Volumenelementen (26) definiert,
- jedem Volumenelement (26) wird ein Speicherplatz in einem Speichermedium (27) zugeordnet,
- das Wasserfahrzeug (11) mit dem nach Steuerbord und/oder Backbord weisenden Empfangssektor (18) wird über eine Mehrzahl von geradlinigen, mit Vertikalabstand übereinanderliegenden, parallelen Wegstrecken (28) bewegt,
- in aufeinanderfolgenden, vorzugsweise äquidistanten Messstellen (29) längs der Wegstrecken (28) wird jeweils ein Schallimpuls ausgesendet und nach Rückstreuung aus dem Unterwasserareal (10) über die Richtcharakteristik als Empfangssignal erfasst und gefiltert,
- in jeder Messstelle (29) wird aus dem durch die Filterung entstandenen Filtersignal für jedes Volumenelement (26), das innerhalb des vom horizontalen und vertikalen Öffnungwinkel ($\varphi$, $\varphi_V$) der Richtcharakteristik eingegrenzten Bereichs des Analyseraums liegt, anhand der Lage des Volumenelements (26) im Analyseraum-Bereich ein Amplitudenwert ermittelt, indem im Analyseraum-Bereich bis zu den Bereichsgrenzen sich erstrekkende, in Radialrichtung aneinanderliegende, sphärisch gekrümmte Quader (30) mit einer vorgebbaren, radialen Breite gebildet werden, deren mittlere Krümmungsradien durch mit der Schallgeschwindigkeit multiplizierte, dem Filtersignal entnommene Zeitwerte festgelegt werden, und der zu jedem entnommenen Zeitwert zugehörige Amplitudenwert des Filtersignals jedem Volumenelement (26), das ganz oder teilweise innerhalb des durch den Zeitwert bestimmten Quaders. (30) liegt, zugewiesen wird,
- der für jedes Volumenelement (26) ermittelte Amplitudenwert wird abhängig von der spezifischen Lage des jeweiligen Volumenelements (26) im Analyseraum-Bereich gewichtet und
- die gewichteten Amplitudenwerte werden in die den Volumenelementen (26) zugeordneten Speicherplätze eingeschrieben und dabei auf einen im Speicherplatz bereits vorhandenen Speicherwert aufaddiert.

2. Verfahren nach Anspruch 1, bei dem die lagespezifische Wichtung der Amplitudenwerte in der Weise durchgeführt wird, dass jeder einem Volumenelement (26) zugewiesene Amplitudenwert mit einem Volumen-Wichtungsfaktor, der den innerhalb des Quaders (30) liegenden Volumenanteil des Volumenelements (26) berücksichtigt, und/oder mit einem Empfangsempfindlichkeits-Wichtungsfaktor, der die Empfangsempfindlichkeit der Richtcharakteristik am Ort des Volumenelements (26) berücksichtigte multipliziert wird.

3. Verfahren nach Anspruch 1 oder 2, bei dem die Quader (30) mit einer der gewünschten, vorzugsweise maximalen, Auflösung entsprechenden radialen Breite und die Volumenelemente (26) mit einer quadratischen Grund- und Deckfläche, die jeweils im Bereich der gewünschten, vorzugsweise maximalen, radialen Auflösung liegende Kantenlängen aufweisen, und mit einer vertikalen Höhe ($\Delta_Z$) ausgebildet werden.

4. Verfahren zum Erzeugen eines Sonarbildes von einem Unterwasserareal (10) unter Verwendung eines von einem Wasserfahrzeug (11) getragenen Sonars, das eine Sendeantenne (15) zum Abstrahlen von Schallimpulsen und eine Empfangsantenne (19) zum Empfangen von aus dem Unterwasserareal (10) zurückgestreuten Schallwellen aufweist, die einen Empfangssektor (18) mit einem horizontalen und vertikalen Sektorwinkel ($\varphi_B$, $\varphi_Z$) aufspannt, der von mindestens einer einen vorgebbaren horizontalen und vertikalen Öffnungswinkel ($\varphi$, $\varphi_V$) aufweisenden Richtcharakteristik der Empfangsantenne (19) überdeckt ist, bei dem folgende Verfahrensschritte durchgeführt werden:

- im Unterwasserareal (10) wird ein dreidimensionaler Analyseraum aus einer Vielzahl von aneinander- und übereinandergereihten Volumenelementen (26) definiert,
- jedem Volumenelement (26) wird ein Speicherplatz in einem Speichermedium (27) zugeordnet,
- das Wasserfahrzeug (11) mit dem nach Steuerbord und/oder Backbord weisenden Empfangssektor (18) wird über eine Mehrzahl von geradlinigen, mit Vertikalabstand übereinanderliegenden, parallelen Wegstrecken (28) bewegt,
- in aufeinanderfolgenden, vorzugsweise äquidistanten Messstellen (29) längs der Wegstrekken (28) wird jeweils ein Schallimpuls ausgesendet und nach Rückstreuung aus dem Unterwasserareal (10) über die Richtcharakteristik als Empfangssignal erfasst und gefiltert,
- in jeder Messstelle (29) wird aus dem durch die Filterung entstandenen Filtersignal für jedes Volumenelement (26), das innerhalb des vom horizontalen und vertikalen Öffnungswinkel ($\varphi$,

$\varphi_V$) der Richtcharakteristik eingegrenzten Bereichs des Analyseraums liegt, anhand der Lage des Volumenelements (26) im Analyseraum-Bereich ein Amplitudenwert ermittelt, indem für jedes Volumenelement (26) innerhalb des Analyseraum-Bereichs die Entfernung seines Zentrums von dem Zentrierpunkt des Empfangssektors (18) bestimmt, daraus mit der Schallgeschwindigkeit ein Zeitwert berechnet wird und zu jedem Zeitwert aus dem Filtersignal ein dem Zeitwert zugehöriger Amplitudenwert entnommen und dem Volumenelement (26) zugewiesen wird,
- der für jedes Volumenelement (26) ermittelte Amplitudenwert wird abhängig von der spezifischen Lage des jeweiligen Volumenelements (26) im Analyseraum-Bereich gewichtet und in
- die gewichteten Amplitudenwerte werden in die den Volumenelementen (26) zugeordneten Speicherplätze eingeschrieben und dabei auf einen im Speicherplatz bereits vorhandenen Speicherwert aufaddiert.

5. Verfahren nach Anspruch 4, bei dem die lagespezifische Wichtung der Amplitudenwerte in der Weise durchgeführt wird, dass jeder einem Volumenelement (26) zugewiesene Amplitudenwert mit einem Empfangsempfindlichkeits-Wichtungsfaktor multipliziert wird, der die Empfangsempfindlichkeit der Richtcharakteristik am Ort des Volumenelements (26) berücksichtigt.

6. Verfahren nach Anspruch 4 oder 5, bei dem die Volumenelemente (26) mit einer quadratischen Grund- und Deckfläche, deren Kantenlängen gleich einer gewünschten, vorzugsweise maximalen, oder kleiner als eine gewünschte, vorzugsweise maximale, radiale Auflösung sind, und mit einer vertikalen Höhe ($\Delta_Z$) ausgebildet werden.

7. Verfahren nach Anspruch 3 oder 6, bei dem die vertikale Höhe ($\Delta_Z$) ungefähr $\dfrac{c \cdot \tau}{2}\dfrac{2x_{min}}{z_L - z_1}$ bemessen wird, wobei $Z_L$-$Z_1$ der vertikale Abstand zwischen der obersten und untersten der Wegstrecken (28), $x_{min}$ der minimale, horizontale Abstand des Analyseraums von den Wegstrecken (28) und $c \cdot \tau / 2$ die maximale radiale Auflösung mit $c$ als Schallgeschwindigkeit im Wasser und $\tau$ als Impulsdauer der von der Sendeantenne (15) abgestrahlten Schallimpulse ist.

8. Verfahren nach einem der Ansprüche 1 bis 7 bei dem als Empfangssignale durch Richtungsbildung gewonnene, komplexe Gruppensignale verwendet werden.

9. Verfahren nach einem der Ansprüche 1 bis 7, bei dem als Empfangssignale der Zeitverlauf des Betrags oder des quadratischen Betrags von durch Richtungsbildung gewonnenen, komplexen Gruppensignalen verwendet werden.

10. Verfahren nach einem der Ansprüche 1 bis 7, bei dem als Empfangssignale die Realteile von durch Richtungsbildung gewonnenen Gruppensignalen verwendet werden.

11. Verfahren nach Anspruch 9, bei dem das Empfangssignal mit einer Abtastfrequenz von 1/T abgetastet wird und dies Filterung des zeitdiskreten Empfangssignals mittels eines linearen Systems vorgenommen wird, dessen periodische Obertragungsfunktion H($e^{j\omega T}$) innerhalb der durch die halbe negative und halbe positive Abtastkreisfrequenz (-$\pi/2T$ bzw. +$\pi/2T$) festgelegten Grenzen proportional dem Betrag der Kreisfrequenz $\omega$ ist und von der unteren Grenze bis Null abfällt und von Null bis zur oberen Grenze ansteigt.

12. Verfahren nach einem der Ansprüche 1 bis 3 und Anspruch 11, bei dem in dem Filtersignal diskrete Zeitwerte aufgesucht und mittels der Schallgeschwindigkeit die mittleren Krümmungsradien der den Zeitwerten zuzuordnenden Quader (30) berechnet werden.

13. Verfahren nach einem der Ansprüche 4 bis 6 und Anspruch 11, bei dem in dem Filtersignal zu den für die Volumenelemente (26) berechneten Zeitwerten zugehörige Amplitudenwerte durch Interpolation gewonnen werden.

14. Verfahren nach einem der Ansprüche 1 bis 13, bei dem am Ende der vom Wasserfahrzeug (11) zurückgelegten Wegstrecken (28) der Speicherinhalt des Speichermediums (27) normiert wird.

15. Verfahren nach Anspruch 14, bei dem die Normierung in der Weise durchgeführt wird, dass jeder der in den Speicherplätzen enthaltenen Speicherwerte durch die Summe der Quadrate der in den jeweiligen Speicherwert eingegangen Wichtungsfaktoren dividiert wird.

16. Verfahren nach einem der Ansprüche 1 bis 15, bei dem der horizontale Sektorwinkel ($\varphi_B$) des Empfangssektors (18) so groß wie einbaubedingt möglich bemessen und der horizontale und vertikale Öffnungswinkel ($\varphi, \varphi_V$) der Richtcharakteristik der Empfangsantenne (19) gleich dem horizontalen und vertikalen Sektorwinkel. ($\varphi_B, \varphi_Z$) des Empfangssektors (18) gewählt wird.

17. Verfahren nach einem der Ansprüche 1 bis 15, bei dem mittels der Empfangsantenne (19) im Empfangssektor (18) eine Vielzahl von fächerartig horizontal aneinandergereihten Richtcharakteristiken mit vorzugsweise gleichen horizontalen Öffnungswirikeln ($\varphi$) und vorzugsweise gleichen vertikalen Öffnungswinkeln ($\varphi_V$) aufgespannt wird, die so bemessen werden, dass die Summe der horizontalen Öffnungswinkel ($\varphi$) gleich dem horizontalen Sektorwinkel ($\varphi_B$) des Empfangssektors (18) und jeder vertikale Öffnungswinkel ($\varphi_V$) gleich dem vertikalen Sektorwinkel ($\varphi_Z$) des Empfangssektors (18) ist.

18. Verfahren nach einem der Ansprüche 1 bis 15, bei dem mittels der Empfangsantenne (19) im Empfangssektor (18) eine Vielzahl von fächerartig horizontal und vertikal aneinandergereihten Richtcharakteristiken mit vorzugsweise gleichen horizontalen Öffnungswinkeln ($\varphi$) und vorzugsweise gleichen vertikale Öffnungswinkeln ($\varphi_V$) aufgespannt wird, die so bemessen werden, dass die Summe der horizontalen Öffnungswinkel ($\varphi$) gleich dem horizontalen Sektorwinkel ($\varphi_B$) des Empfangssektors (18) und die Summe der vertikalen Öffnungswinkel ($\varphi_V$) gleich dem vertikalen Öffnungswinkel ($\varphi_Z$) des Empfangssektors (18) ist.

19. Verfahren nach Anspruch 17 oder 18, bei dem der horizontale Sektorwinkel ($\varphi_B$) der Empfangsantenne (19) so groß wie einbaubedingt möglich bemessen wird.

20. Verfahren nach einem der Ansprüche 15 bis 19, bei dem jede der vom Wasserfahrzeug (11) zurückzulegenden, parallelen Wegstrecken (28) mindestens so groß bemessen wird, dass jedes Volumenelement (26) im Analyseraum mindestens einmal von jeder seitlichen Begrenzungskante (182) des Empfangssektors (18) überstrichen wird.

21. Verfahren nach einem der Ansprüche 1 bis 19, bei dem jede der parallelen Wegstrecken (28) in zwei Streckenabschnitte (281, 282) unterteilt wird, die in der Horizontalebene rechtwinklig zueinander ausgerichtet sind, und jeder Streckenabschnitt (281, 282) so groß bemessen wird, dass von jedem Streckenabschnitt (281, 282) aus jedes Volumenelement (26) im Analyseraums mindestens einmal von der in Fahrtrichtung vorderen, seitlichen Begrenzungskanten (182) und der in Fahrtrichtung hinteren, seitlichen Begrenzungskante (183) des Empfangssektors (18) überstrichen wird.

22. Verfahren nach einem der Ansprüche 1 bis 21, bei dem die Mittelachse (101) des steuer- und/oder backbordweisenden Empfangssektors (18) unter einem Winkel von 90° zur Längsachse des Wasserfahrzeugs (11) ausgerichtet ist.

**Claims**

1. Method for generating a sonar image of an underwater area (10) by using a sonar carried by a water craft (11) which has a transmitting antenna (15) for radiating sound pulses and a receiving antenna (19) for receiving sound waves back scattered from the underwater area (10), which spans a receiving sector (18) with a horizontal and vertical sector angle ($\varphi_B$, $\varphi_Z$) which is covered by at least one directional pattern of the receiving antenna (19) having a predeterminable horizontal and vertical aperture angle ($\varphi$, $\varphi_V$), in which the following method steps are carried out:

   - in the underwater area (10), a three-dimensional analysis space of a multiplicity of volume elements (26) located adjacently to one another and above one another is defined,
   - each volume element (26) is allocated a storage location in a storage medium (27),
   - the water craft (11) with the receiving sector (18) pointing to starboard and/or port is moved over a plurality of straight-line parallel routes (28) which are above one another at a vertical distance,
   - at successive, preferably equidistant measuring points (29) along the routes (28), a sound pulse is emitted in each case and, after being back scattered from the underwater area (10), is detected as received signal via the directional pattern and filtered,
   - at each measuring point (29), an amplitude value is determined from the filter signal produced by the filtering, for each volume element (26) which is located within the area of the analysis space bounded by the horizontal and vertical aperture angle ($\varphi$, $\varphi_V$) of the directional pattern, by means of the position of the volume element (26) in the analysis space area, in that, in the analysis space area, spherically curved cuboids (30) with a predeterminable radial width, the mean radii of curvature of which are specified by time values taken from the filter signal, multiplied by the velocity of sound, which are adjacent to one another in the radial direction and which extend up to the area boundaries, are formed and the amplitude value, belonging to each time value taken, of the filter signal is assigned to each volume element (26) which is wholly or partially located inside the cuboid (30) determined by the time value,
   - the amplitude value determined for each volume element (26) is weighted in dependence on the specific position of the respective volume element (26) in the analysis space area and
   - the weighted amplitude values are written into the storage locations allocated to the volume elements (26) and at the same time added to a memory value already present in the storage location.

2. Method according to Claim 1, in which the position-specific weighting of the amplitude values is carried out in such a manner that each amplitude value assigned to a volume element (26) is multiplied by a volume weighting factor which takes into consideration the volume percentage of the volume element (26) located inside the cuboid (30) and/or by a receiving sensitivity weighting factor which takes into consideration the receiving sensitivity of the directional pattern at the location of the volume element (26).

3. Method according to Claim 1 or 2, in which the cuboids (30) are constructed with a radial width corresponding to the desired, preferably maximum resolution and the volume elements (26) are constructed with a square base and cover area which in each case have edge lengths located in the area of the desired, preferably maximum radial resolution, and with a vertical height ($\Delta_Z$).

4. Method for generating a sonar image of an underwater area (10) by using a sonar carried by a water craft (11) which has a transmitting antenna (15) for radiating sound pulses and a receiving antenna (19) for receiving sound waves back scattered from the underwater area (10), which spans a receiving sector (18) with a horizontal and vertical sector angle ($\varphi_B$, $\varphi_Z$) which is covered by at least one directional pattern of the receiving antenna (19) having a predeterminable horizontal and vertical aperture angle ($\varphi$, $\varphi_V$), in which the following method steps are carried out:

- in the underwater area (10), a three-dimensional analysis space of a multiplicity of volume elements (26) located adjacently to one another and above one another is defined,
- each volume element (26) is allocated a storage location in a storage medium (27),
- the water craft (11) with the receiving sector (18) pointing to starboard and/or port is moved over a plurality of straight-line parallel routes (28) which are above one another at a vertical distance,
- at successive, preferably equidistant measuring points (29) along the routes (28), a sound pulse is emitted in each case and, after being back scattered from the underwater area (10), is detected as received signal via the directional pattern and filtered,
- at each measuring point (29), an amplitude value is determined from the filter signal produced by the filtering, for each volume element (26) which is located within the area of the analysis space bounded by the horizontal and vertical aperture angle ($\varphi$, $\varphi_V$) of the directional pattern, by means of the position of the volume element (26) in the analysis space area, in that for each volume element (26) within the analysis space area, the distance of its center from the centering point of the receiving sector (18) is determined, from this a time value is calculated with the velocity of sound and an amplitude value belonging to the time value is taken from the filter signal with respect to each time value and assigned to the volume element (26),
- the amplitude value determined for each volume element (26) is weighted in dependence on the specific position of the respective volume element (26) in the analysis space area and
- the weighted amplitude values are written into the storage locations allocated to the volume elements (26) and at the same time added to a memory value already present in the storage location.

5. Method according to Claim 4, in which the position-specific weighting of the amplitude values is carried out in such a manner that each amplitude value assigned to a volume element (26) is multiplied by a receiving sensitivity weighting factor which takes into consideration the receiving sensitivity of the directional pattern at the location of the volume element (26).

6. Method according to Claim 4 or 5, in which the volume elements (26) are constructed with a square base and cover area, the edge lengths of which are equal to a desired, preferably maximum or smaller than a desired, preferably maximum radial resolution, and with a vertical height ($\Delta_Z$).

7. Method according to Claim 3 or 6, in which the vertical height ($\Delta_Z$) is approximately dimensioned as

$$\frac{c \cdot \tau}{2} \frac{2x_{min}}{z_L - z_l}$$ where $Z_L$-$Z_1$ is the vertical distance between the top and the lowest of the routes (28), $x_{min}$ is the minimum horizontal distance of the analysis space from the routes (28) and c·τ/2 is the maximum radial resolution with c as the velocity of sound in water and τ as pulse duration of the sound pulses radiated by the transmitting antenna (15).

8. Method according to one of Claims 1 to 7, in which complex group signals obtained by direction-forming are used as received signals.

9. Method according to one of Claims 1 to 7, in which the variation with time of the absolute value or of the quadratic absolute value of complex group signals obtained by direction-forming are used as received signals.

10. Method according to one of Claims 1 to 7, in which the real parts of group signals obtained by direction-forming are used as received signals.

11. Method according to Claim 9, in which the received signal is sampled with a sampling frequency of 1/T and the time-discrete received signal is filtered by means of a linear system, the periodic transfer function H ($e^{j\omega T}$) of which is proportional to the amount of the angular frequency ω within the limits defined by half the negative and half the positive angular sampling frequency (-π/2T and +π/2T, respectively) and drops from the bottom limit to zero and rises from zero to the top limit.

12. Method according to one of Claims 1 to 3 and Claim 11, in which discrete time values are sought in the filter signal and the mean curvature radii of the cuboids (30) to be allocated with the time values are calculated by means of the velocity of sound.

13. Method according to one of Claims 4 to 6 and claim 11, in which amplitude values belonging to the time values calculated for the volume elements (26) are obtained by interpolation in the filter signal.

14. Method according to one of Claims 1 to 13, in which the memory content of the storage medium (27) is normalized at the end of the routes (28) traveled by the water craft (11).

15. Method according to Claim 14, in which the normalizing is carried out in such a manner that each of the memory values contained in the storage locations is divided by the sum of the squares of the weighting factors included in the respective memory value.

16. Method according to one of Claims 1 to 15, in which the horizontal sector angle ($\varphi_B$) of the receiving sector (18) is dimensioned to be as large as possible under installation conditions and the horizontal and vertical aperture angle ($\varphi$, $\varphi_V$) of the directional pattern of the receiving antenna (19) is selected to be equal to the horizontal and vertical sector angle ($\varphi_B$, $\varphi_Z$) of the receiving sector (18).

17. Method according to one of Claims 1 to 15, in which a multiplicity of directional patterns placed next to one another horizontally in the manner of a fan with preferably identical horizontal aperture angles ($\varphi$) and preferably identical vertical aperture angles ($\varphi_V$) is opened in the receiving sector (18) by means of the receiving antenna (19), which are dimensioned in such a manner that the sum of the horizontal aperture angles ($\varphi$) is equal to the horizontal sector angle ($\varphi_B$) of the receiving sector (18) and each vertical aperture angle ($\varphi_V$) is equal to the vertical sector angle ($\varphi_Z$) of the receiving sector (18).

18. Method according to one of Claims 1 to 15, in which a multiplicity of directional patterns placed next to one another horizontally and vertically in the manner of a fan, with preferably identical horizontal aperture angles ($\varphi$) and preferably identical vertical aperture angles ($\varphi_V$), is opened in the receiving sector (18) by means of the receiving antenna (19), which are dimensioned in such a manner that the sum of the horizontal aperture angles ($\varphi$) is equal to the horizontal sector angle ($\varphi_B$) of the receiving sector (18) and the sum of the vertical aperture angles ($\varphi_V$) is equal to the vertical aperture angle ($\varphi_Z$) of the receiving sector (18).

19. Method according to Claim 17 or 18, in which the horizontal sector angle ($\varphi_B$) of the receiving antenna (19) is dimensioned to be as large as possible under installation conditions.

20. Method according to one of Claims 15 to 19, in which each of the parallel routes (28) to be traveled by the water craft (11) is dimensioned to be at least so large that each volume element (26) in the analysis space is scanned at least once by each lateral limiting edge (182) of the receiving sector (18).

21. Method according to one of Claims 1 to 19, in which each of the parallel routes (28) is subdivided into two route sections (281, 282) which are oriented at right angles to one another in the horizontal plane, and each route section (281, 282) is dimensioned to be so large that each volume element (26) in the analysis space is scanned at least once by the front lateral limiting edges (182) in the direction of travel and the rear lateral limiting edge (183) in the direction of travel of the receiving sector (18) from each route section (281, 282).

22. Method according to one of Claims 1 to 21, in which the center axis (101) of the receiving sector (18), pointing toward starboard and/or port, is oriented at an angle of 90° to the longitudinal axis of the water craft (11).

**Revendications**

1. Procédé pour générer une image de sonar d'une région sous-marine (10) en utilisant un sonar porté par un navire (11), lequel présente une antenne d'émission (15) pour émettre des impulsions sonores et une antenne de réception (19) pour recevoir les ondes sonores rétrodiffusées par la région sous-marine (10), laquelle s'étend sur un secteur de réception (18) ayant un angle de secteur horizontal et vertical ($\varphi_B$, $\varphi_Z$), lesquels sont couverts par au moins une caractéristique directionnelle de l'antenne de réception (19) présentant un angle d'ouverture horizontal et vertical ($\varphi$, $\varphi_V$), avec lequel sont exécutées les étapes suivantes :

- un espace d'analyse tridimensionnel constitué d'une pluralité d'éléments de volume (26) alignés les uns contre les autres et les uns au-dessus des autres est défini dans la région sous-marine (10),
- un emplacement de mémoire dans un support de mémorisation (27) est associé à chaque élément de volume (26),
- le navire (11) avec le secteur de réception (18) dirigé vers tribord et/ou bâbord est déplacé sur une pluralité de trajectoires (28) rectilignes parallèles espacées les unes au-dessus des autres dans le sens vertical,
- une impulsion sonore est à chaque fois émise à des points de mesure (29) successifs de préférence équidistants le long des trajectoires (28), puis détectée en tant que signal reçu sur la caractéristique directionnelle après rétrodiffusion depuis la région sous-marine (10) et filtrée,
- à chaque point de mesure (29), une valeur d'amplitude est déterminée à partir du signal filtré produit par le filtrage pour chaque élément de volume (26) qui se trouve à l'intérieur de la zone de l'espace d'analyse, délimitée par l'angle d'ouverture horizontal et vertical ($\varphi$, $\varphi_V$) de la caractéristique directionnelle, au moyen de la position de l'élément de volume (26) dans la zone de l'espace d'analyse, en formant dans la zone de l'espace d'analyse des parallélépipèdes (30) qui s'étendent jusqu'aux limites de la zone, disposés les uns à côté des autres dans le sens radial, courbés de manière sphérique et ayant une largeur radiale pouvant être prédéfinie, dont les rayons de courbure moyens sont fixés par les valeurs de temps prélevées du signal filtré et multipliées par la vitesse du son, et la valeur d'amplitude du signal filtré associée à chaque valeur de temps prélevée est associée à chaque élément de volume (26) qui se trouve en totalité ou en partie à l'intérieur du parallélépipède (30) défini par la valeur de temps,
- la valeur d'amplitude déterminée pour chaque élément de volume (26) est pondérée en fonction de la position spécifique de l'élément de volume (26) correspondant dans la zone de l'espace d'analyse et
- les valeurs d'amplitude pondérées sont inscrites dans les emplacements de mémoire associés aux éléments de volume (26) et additionnées ainsi à une valeur mémorisée déjà présente dans l'emplacement de mémoire.

2. Procédé selon la revendication 1, avec lequel la pondération spécifique à la position des valeurs d'amplitude est réalisée de telle sorte que chaque valeur d'amplitude associée à un élément de volume (26) est multipliée par un facteur de pondération de volume qui tient compte de la part volumique de l'élément de volume (26) qui se trouve à l'intérieur du parallélépipède (30) et/ou par un facteur de pondération de sensibilité de réception qui tient compte de la sensibilité de réception de la caractéristique directionnelle à l'endroit de l'élément de volume (26).

3. Procédé selon la revendication 1 ou 2, avec lequel les parallélépipèdes (30) sont formés avec une largeur radiale correspondant à la résolution souhaitée, de préférence maximale, et les éléments de volume (26) avec une surface de base et de recouvrement quadratique qui présente des longueurs d'arête qui se trouvent à chaque fois dans la plage de la résolution radiale souhaitée, de préférence maximale, et avec une hauteur verticale ($\Delta_Z$).

4. Procédé pour générer une image de sonar d'une région sous-marine (10) en utilisant un sonar porté par un navire (11), lequel présente une antenne d'émission (15) pour émettre des impulsions sonores et une antenne de réception (19) pour recevoir les ondes sonores rétrodiffusées par la région sous-marine (10), laquelle s'étend sur un secteur de réception (18) ayant un angle de secteur horizontal et vertical ($\varphi_B$, $\varphi_Z$), lesquels sont couverts par au moins une caractéristique directionnelle de l'antenne de réception (19) présentant un angle d'ouverture horizontal et vertical ($\varphi$, $\varphi_V$), avec lequel sont exécutées les étapes suivantes :

- un espace d'analyse tridimensionnel constitué d'une pluralité d'éléments de volume (26) alignés les uns contre les autres et les uns au-dessus des autres est défini dans la région sous-marine (10),
- un emplacement de mémoire dans un support de mémorisation (27) est associé à chaque élément de volume (26),
- le navire (11) avec le secteur de réception (18) dirigé vers tribord et/ou bâbord est déplacé sur une pluralité de trajectoires (28) rectilignes parallèles espacées les unes au-dessus des autres dans le sens vertical,
- une impulsion sonore est à chaque fois émise à des points de mesure (29) successifs de préférence équidistants le long des trajectoires (28), puis détectée en tant que signal reçu sur la caractéristique directionnelle après rétrodiffusion depuis la région sous-marine (10) et filtrée,
- à chaque point de mesure (29), une valeur d'amplitude est déterminée à partir du signal filtré produit par le filtrage pour chaque élément de volume (26) qui se trouve à l'intérieur de la zone de l'espace d'analyse, délimitée par l'angle d'ouverture horizontal et vertical ($\varphi$, $\varphi_V$) de la caractéristique directionnelle, au moyen de la position de l'élément de volume (26) dans la zone de l'espace d'analyse, en déterminant pour chaque élément de volume (26) à l'intérieur de la zone de l'espace d'analyse la distance entre son centre et le centre du secteur de réception (18), en calculant à partir de cela une valeur de temps avec la vitesse du son et en prélevant du signal filtré pour chaque valeur de temps une valeur d'amplitude correspondant à la valeur de temps et en l'associant à l'élément de volume (26),

- la valeur d'amplitude déterminée pour chaque élément de volume (26) est pondérée en fonction de la position spécifique de l'élément de volume (26) correspondant dans la zone de l'espace d'analyse et

- les valeurs d'amplitude pondérées sont inscrites dans les emplacements de mémoire associés aux éléments de volume (26) et additionnées ainsi à une valeur mémorisée déjà présente dans l'emplacement de mémoire.

5. Procédé selon la revendication 4, avec lequel la pondération spécifique à la position des valeurs d'amplitude est réalisée de telle sorte que chaque valeur d'amplitude associée à un élément de volume (26) est multipliée par un facteur de pondération de sensibilité de réception qui tient compte de la sensibilité de réception de la caractéristique directionnelle à l'endroit de l'élément de volume (26).

6. Procédé selon la revendication 4 ou 5, avec lequel les éléments de volume (26) sont formés avec une surface de base et de recouvrement quadratique dont les longueurs d'arête sont égales à une résolution radiale souhaitée, de préférence maximale, ou sont inférieures à une résolution radiale souhaitée, de préférence maximale, et avec une hauteur verticale ($\Delta_Z$).

7. Procédé selon la revendication 3 ou 6, avec lequel la hauteur verticale ($\Delta_Z$) est fixée approximativement

à $\dfrac{c.\tau}{2} \dfrac{2x_{min}}{z_L - z_1}$, $z_L$ - $z_1$ désignant l'écart vertical entre la trajectoire (28) la plus haute et la plus basse, $x_{min}$ l'écart horizontal minimum entre l'espace d'analyse et la trajectoire (28) et c·$\tau$/2 la résolution radiale maximale avec c indiquant la vitesse du son dans l'eau et $\tau$ la durée de l'impulsion sonore émise par l'antenne d'émission (15).

8. Procédé selon l'une des revendications 1 à 7, avec lequel les signaux reçus utilisés sont les signaux groupés complexes obtenus par formation de la direction.

9. Procédé selon l'une des revendications 1 à 7, avec lequel les signaux reçus utilisés sont l'évolution dans le temps de la valeur ou du carré de la valeur des signaux groupés complexes obtenus par formation de la direction.

10. Procédé selon l'une des revendications 1 à 7, avec lequel les signaux reçus utilisés sont les parties réelles des signaux groupés complexes obtenus par formation de la direction.

11. Procédé selon la revendication 9, avec lequel le signal reçu est échantillonné à une fréquence d'échantillonnage égale à 1/T et le filtrage du signal reçu discret dans le temps est effectué au moyen d'un système linéaire dont la fonction de transfert périodique $H(e^{j\omega T})$ à l'intérieur des limites fixées par la demi-fréquence angulaire négative et positive (-$\pi$/2T ou +$\pi$/2T) est proportionnelle à la valeur de la fréquence angulaire $\omega$ et chute de la limite inférieure à zéro puis augmente de zéro à la limite supérieure.

12. Procédé selon l'une des revendications 1 à 3 et la revendication 11, avec lequel les valeurs de temps discrètes sont recherchées dans le signal filtré et les rayons de courbure moyens des parallélépipèdes (30) à associer aux valeurs de temps sont calculés au moyen de la vitesse du son.

13. Procédé selon l'une des revendications 4 à 6 et la revendication 11, avec lequel les valeurs d'amplitude correspondant aux valeurs de temps calculées pour les éléments de volume (26) sont obtenues par interpolation dans le signal filtré.

14. Procédé selon l'une des revendications 1 à 13, avec lequel le contenu mémorisé du support de mémorisation (27) est normalisé à la fin des trajectoires (28) parcourues par le navire (11).

15. Procédé selon la revendication 14, avec lequel la normalisation est réalisée de telle sorte que les valeurs mémorisées qui se trouvent dans les emplacements de mémoire sont divisées par la somme des carrés des facteurs de pondération qui sont intervenus dans la valeur mémorisée correspondante.

16. Procédé selon l'une des revendications 1 à 15, avec lequel l'angle de secteur horizontal ($\varphi_B$) du secteur de réception (18) est fixé aussi grand que le permet l'installation et les angles d'ouverture horizontal et vertical ($\varphi$, $\varphi_V$) de la caractéristique directionnelle de l'antenne de réception (19) sont choisis égaux aux angles de secteur horizontal et vertical ($\varphi_B$, $\varphi_Z$) du secteur de réception (18).

17. Procédé selon l'une des revendications 1 à 15, avec lequel une pluralité de caractéristiques directionnelles alignées les unes à côté des autres dans le sens horizontal à la manière d'un éventail et ayant de préférence les mêmes angles d'ouverture horizontaux ($\varphi$) et de préférence les mêmes angles d'ouverture verticaux ($\varphi_V$) sont couvertes au moyen de l'antenne de réception (19) dans le secteur de réception (18), lesquelles sont dimensionnées de telle sorte que la somme des angles d'ouverture horizontaux ($\varphi$) est égale à l'angle de secteur horizontal ($\varphi_B$) du secteur de réception (18) et chaque angle d'ouverture vertical ($\varphi_V$) est égal à l'angle de secteur vertical ($\varphi_Z$) du secteur de réception (18).

18. Procédé selon l'une des revendications 1 à 15, avec lequel une pluralité de caractéristiques directionnelles alignées les unes à côté des autres dans le sens horizontal et vertical à la manière d'un éventail et ayant de préférence les mêmes angles d'ouverture horizontaux ($\varphi$) et de préférence les mêmes angles d'ouverture verticaux ($\varphi_V$) sont couvertes au moyen de l'antenne de réception (19) dans le secteur de réception (18), lesquelles sont dimensionnées de telle sorte que la somme des angles d'ouverture horizontaux ($\varphi$) est égale à l'angle de secteur horizontal ($\varphi_B$) du secteur de réception (18) et la somme des angles d'ouverture verticaux ($\varphi_V$) est égale à l'angle d'ouverture vertical ($\varphi_Z$) du secteur de réception (18).

19. Procédé selon la revendication 17 ou 18, avec lequel l'angle de secteur horizontal ($\varphi_B$) de l'antenne de réception (19) est fixé aussi grand que le permet l'installation.

20. Procédé selon l'une des revendications 15 à 19, avec lequel chacune des trajectoires (28) parallèles parcourues par le navire (11) a une taille au moins suffisante pour que chaque élément de volume (26) dans l'espace d'analyse soit balayé au moins une fois par chaque arête de délimitation dans le temps (182) du secteur de réception (18).

21. Procédé selon l'une des revendications 1 à 19, avec lequel chacune des trajectoires (28) parallèles est divisée en deux portions de trajectoire (281, 282) qui sont alignées perpendiculairement l'une à l'autre dans le plan horizontal et chaque portion de trajectoire (281, 282) est dimensionnée suffisamment grande pour que chaque portion de trajectoire (281, 282) de chaque élément de volume (26) dans l'espace d'analyse soit balayée au moins une fois par les arêtes de délimitation latérales avant (182) dans le sens du déplacement et par l'arête de délimitation latérale arrière (183) dans le sens du déplacement du secteur de réception (18).

22. Procédé selon l'une des revendications 1 à 21, avec lequel l'axe médian (101) du secteur de réception (18) dirigé vers tribord et/ou bâbord est orienté selon un angle de 90° par rapport à l'axe longitudinal du navire (11).

$\varphi_Z = \varphi_v$

$x_{min}$

$x_{max}$

10

18/22

11

Fig. 1

12

14

SG

15

16

17

Fig. 2

**Fig. 3**

Fig. 4

18

Fig. 5

221  222  30

z
y
x

$\varphi_V$

26

22

$\varphi$

224  223

$\frac{c \cdot \tau}{2}$

Fig. 6

30 301 30 222

26
22
301

a

a(n)
a(n+1)

$\varphi$

nT (n+1)T (n+2)T  t

nT (n+1)T

221

Fig. 7

**Fig. 8**

$H(e^{j\omega T})$

**Fig. 9**

Fig. 10

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4288866 A

**In der Beschreibung aufgeführte Nicht-Patentliteratur**

- **Steven G. Schock et al.** Buried Object Scannung Sonar. *IEEE JOURNAL OF OCEANIC ENGINEERING,* Oktober 2001, vol. 26 (4

- **Brian G. Ferguson.** applikation of acoustic reflektion tomography to sonar imaging. *J. Acoust. Soc. Am.,* Mai 2005, vol. 117 (5), 2915-2928